# EUROPEAN PATENT APPLICATION

(11) **EP 3 949 750 A1**
(43) Date of publication of application: **09.02.2022**
(21) Application number: 20779394.4
(22) Date of filing: 21.01.2020
(51) Int. Cl.: A23L 2/00, A23L 2/02, A23L 2/52

(54) **LINALOOL-CONTAINING BEVERAGE**

(30) Priority: 26.03.2019 JP 2019058231
(71) Applicant: Suntory Holdings Limited, Osaka 530-8203 (JP)
(72) Inventor: TOMIYASU, Yuki, Tokyo 104-0031 (JP); IBUSUKI, Daigo, Kawasaki-shi, Kanagawa 211-0067 (JP)
(74) Representative: Vossius & Partner Patentanwälte Rechtsanwälte mbB
(86) International application number: PCT/JP2020/001839
(87) International publication number: WO 2020/195054

(57) **Abstract**

The present invention address the problem of providing a beverage having a citrus flavor while having off-flavors suppressed. The present invention provides a beverage containing 5 ppm or less of linalool and 0.25 to 30 ppm of chitosan.

## Description

### TECHNICAL FIELD

The present invention relates to a linalool-containing beverage. Specifically, the present invention relates to a beverage having specific amounts of chitosan and linalool while occurrence of an unpleasant degradation odor (off-flavors) is suppressed.

### BACKGROUND ART

Beverages having citrus fruit flavor provide both suitable sweet-sour taste and citrus fruit-specific refreshing aroma, and are thus popular because of giving a specific refreshing feeling.

However, some people don't like the unique citrus fruit flavor. For instance, PTL1 discloses that addition of a plant extract from the genus *Psophocarpus* of the family *Leguminosae* to a beverage and food having citrus fruit flavor suppresses citrus-specific bitterness and strong sour taste.

In addition, it has been known that citrus fruit-specific refreshing aroma is gradually lost by heating or over time; and off-flavors such as degradation odor occur, causing a decrease in the quality of beverage and food. For instance, PTL2 discloses that epigallocatechin can suppress production of p-cresol and p-methylacetophenone that are degradation odor of citral. Further, PTL3 discloses a technology in which specific amounts of cineole and/or *cis*-3-hexenol are added to a beverage to mask off-flavors generated from citrus fruit aroma components.

### CITATION LIST

### PATENT LITERATURE

PTL1: Japanese Patent Laid-Open No. 2010-057248
PTL2: Japanese Patent Laid-Open No. 2002-338990
PTL3: Japanese Patent Laid-Open No. 2016-036319

### SUMMARY OF INVENTION

### TECHNICAL PROBLEM

Conventionally, suppression of degradation odor (off-flavors) from citrus fruit aroma components has been studied. Unfortunately, when a previously reported deterioration suppressor is added, a beverage taste becomes imbalanced. As a result, intrinsic natural tastiness provided by citrus fruit aroma components is lost. A large number of aroma components have been known as aroma components of citrus fruits. Thus, more specific investigation is needed for establishing an effective measure to suppress the off-flavors.

Here, linalool has been known as an aroma component characteristic of citrus fruits, and is contained in many flavoring agents including a citrus flavoring agent. Then, the present inventors have examined a technology for suppressing, in particular, off-flavors in a linalool-containing beverage. Thus, an object the present invention is to suppress off-flavors in a linalool-containing beverage.

### SOLUTION TO PROBLEM

The present inventors have conducted intensive research to solve the above problem, and as a result, have found that off-flavors of a linalool-containing beverage can be suppressed when the beverage contains chitosan, a material of natural origin. The present inventors have investigated further and have found that use of both linalool and chitosan in specific amounts is important to suppress off-flavors, thereby completing the present invention.

The invention encompasses, but not limited to, the following items.
(1) A beverage comprising 5 ppm or less of linalool and 0.25 to 30 ppm of chitosan.
(2) The beverage according to (1), which is a fruit juice-containing beverage.
(3) The beverage according to (1) or (2), wherein the beverage has a pH of from 2.0 to 5.0.
(4) The beverage according to any one of (1) to (3), wherein the chitosan has a molecular weight of from 100 to 1000 kDa.
(5) The beverage according to any one of (1) to (4), which is a bottled and sterilized beverage.
(6) A method for producing a beverage, comprising adding 5 ppm or less of linalool and 0.25 to 30 ppm of chitosan.
(7) A method of suppressing a degradation odor in a beverage, comprising adding 5 ppm or less of linalool and 0.25 to 30 ppm of chitosan.

### ADVANTAGEOUS EFFECTS OF INVENTION

The invention makes it possible to effectively suppress unpleasant off-flavors in a linalool-containing beverage.

### DESCRIPTION OF EMBODIMENTS

A beverage of the invention contains linalool and chitosan in specific amounts.

### Linalool

A beverage according to the invention contains linalool. Linalool is 3,7-dimethyl-1,6-octadiene-3-ol (chemical formula: C₁₀H₁₈O; CAS No. 78-70-6), and is a component observed in essential oils from various plants such as rosewood, lavender, bergamot, and coriander.

The concentration of linalool in the beverage of the invention is 5 ppm or less and preferably 4 ppm or less, or may be 3 ppm or less or 2 ppm or less. In addition, in a preferable embodiment, the lower limit of the linalool concentration is 0.01 ppm, more preferably 0.1 ppm, and still more preferably 0.5 ppm. The linalool concentration in the beverage may be measured by a common procedure using, for instance, a gas chromatography/mass spectrometry instrument (GC/MS) described in the Examples below.

Linalool contained in the beverage of the invention may be added as fruit juice and/or a flavoring agent. Alternatively, a synthetic product may be utilized. In a preferable embodiment, a flavoring agent and/or fruit juice, which provide a citrus fruit taste, are blended in the beverage of the invention. The fruit flavoring agent may be obtained from a natural source such as fruit juice or perfumed oil, or may be synthesized.

Components other than linalool have been known as aroma components characteristic of citrus fruits. The beverage of the invention optionally comprises other aroma components in addition to linalool. Examples of aroma components characteristic of citrus fruits include d-limonene, citral, α-terpinene, γ-terpinene, α-pinene, β-pinene, nerol, geraniol, myrcene, citronellol, p-cymene, geranyl acetate, α-phellandrene, β-phellandrene, methylheptenone, camphene, or terpinolene dipentene. A beverage having citrus fruit flavor typically contains at least one of the above components. These aroma components may be measured by, for instance, gas chromatography according to a common procedure.

### Chitosan

A beverage according to the invention contains a small amount of chitosan. Chitosan is a straight-chain polysaccharide, which is a glucosamine 1,4-polymer. The chitosan chemical formula is (C₆H₁₁NO₄)ₙ and the molecule weight thereof is as high as several hundreds of thousands depending on the degree of polymerization. As used herein, regardless of the molecular weight and the polymerization degree, a glucosamine 1,4-polymer is called chitosan.

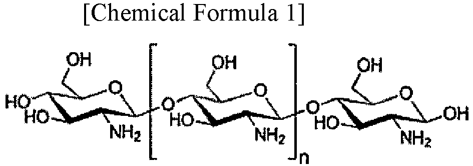

The molecular weight of chitosan blended in the beverage of the invention is not particularly limited. The molecular weight of chitosan is, for instance, 1000 kDa or less, preferably 800 kDa or less, more preferably 500 kDa or less, and still more preferably 200 kDa or less. In one embodiment, the chitosan has a molecular weight of 0.3 kDa or higher, preferably 1 kDa or higher, more preferably 3 kDa or higher, and still more preferably 5 kDa or higher. In a preferable embodiment, n of the above formula is from 0 to 10000, more preferably from 1 to 4000, still more preferably from 10 to 2000, and still more preferably from 50 to 1000. In addition, the chitosan may be used in a form of free amine or may be used as a salt with an appropriate acid. The salt form is not particularly limited as long as the salt can be used for food. Examples of the organic acid salt include an acetate, a lactate, or a citrate. Examples of the inorganic acid salt include a hydrochloride or a sulfate. The preferable salt is a hydrochloride.

Generally speaking, chitosan is unlikely to be dissolved in water depending on the degree of polymerization, and is not readily solubilized particularly in a neutral to alkaline solution. Thus, in the case of blending chitosan in a bottled beverage, it becomes technical hurdles that chitosan be homogeneously blended in a solution, and that neither turbidity nor precipitation occur over time. In view of this, because a small amount of chitosan is contained in the beverage of the invention, there is no problem of stability such as precipitation.

Chitosan may be obtained by subjecting chitin, which can be obtained primarily from an outer skeleton of crustaceans such as crabs or shrimps, to deacetylation. Chitin is not necessarily perfectly converted (deacetylated) into chitosan, and part of the sugar chain may contain N-acetylglucosamine. Thus, commercially available chitosan products have frequently been labelled with a percentage (%DA) of deacetylation. The %DA of commercially available chitosan is often between 60 and 100%.

The amount of chitosan blended in the beverage of the invention is 30 ppm or less. Chitosan is substantially harmless as a food and has almost no taste/odor. However, if the amount of chitosan blended exceeds 30 ppm, occurrence of turbidity due to chitosan may occur. In addition, in a preferable embodiment, the concentration of chitosan in the beverage of the invention is 0.5 ppm or more and may be 1 ppm or more or 3 ppm or more.

Chitosan in the invention may be added in any step of producing each beverage. Examples of the addition procedure include: a procedure for adding it, in advance, in a raw material; a procedure for adding it while raw material components are formulated; or a procedure for adding it after formulated components are dissolved in water. In the case of performing sterilization, the addition of chitosan may be carried out before or after the sterilization.

### Beverage

The invention relates to a beverage. In the beverage of the invention, occurrence of a degradation odor is suppressed, and the beverage is thus suitably provided as a bottled beverage. As used herein, the bottled beverage refers to a beverage contained in a resin container such as a polyethylene terephthalate bottle or a container such as a can, bottle, or paper container. In one embodiment, the beverage of the invention is preferably a bottled beverage charged into a transparent container. The pH of the beverage of the invention is not limited, and is preferably from about 2 to 5.

In a preferable embodiment, the beverage of the invention is a beverage having citrus fruit flavor. As used herein, the beverage having citrus fruit flavor is a beverage having a citrus fruit-like flavor. Examples include not only beverages containing fruit juice of citrus fruits, but also fruit juice-free beverages. Preferable examples of the citrus fruits include: oranges such as Valencia orange and Navel orange; grapefruits such as grapefruit; acid citrus fruits such as lemon, lime, *Citrus depressa*, *Citrus aurantium*, *Citrus junos, Citrus sphaerocarpa*, *Citrus sudachi*, citron, and Buddhas hand citron; miscellaneous citrus fruits such as *Citrus natsudaidai*, *Citrus hassaku*, *Citrus tamurana*, sweetie, and dekopon; tangors such as iyokan, and *Citrus tankan*; tangelos such as Seminole; pomelos such as pomelo; oranges such as mandarin orange, *Citrus unshiu*, ponkan orange, and *Citrus kinokuni*; and kumquats such as kumquat. In a preferable embodiment, the beverage of the invention contains fruit juice of a plant belonging to, as citrus fruits, a genus such as the genus *Citrus,* the genus *Fortunella*, and the genus *Poncirus*, of *Citreae* (*Aurantieae*) of the subfamily *Aurantioideae* of the family *Rutaceae.* Preferable examples include mandarin orange, *Citrus depressa*, *Citrus junos*, *Citrus sudachi*, lime, lemon, *Citrus sphaerocarpa*, orange, and grapefruit. Lemon, orange, and grapefruit are particularly preferable.

In addition, examples of the beverage having citrus fruit flavor include not only non-alcoholic soft drinks but also liquors. Specific preferable examples include a citrus cocktail or a ready-to-drink (RTD) or ready-to-serve (RTS) citrus drink using, in part, a citrus raw material, such as sangria. As described above, no fruit juice may be contained if citrus fruit flavor is felt. Examples may include beverages containing not only a natural flavoring agent containing an aroma component(s) extracted from a citrus fruit(s), but also a synthetic flavoring agent containing an aroma component(s) characteristic of citrus fruits. Examples of the beverage of the invention include citrus fruit juice, a soft drink with a citrus fruit taste, or a liquor obtained by soaking a citrus fruit in alcohol.

In a preferable embodiment of the invention, the beverage of the invention may be a fruit juice-containing beverage. As used herein, the fruit juice may be, of course, obtained by squeezing fruit, and involves a concept including a vegetable juice obtained by squeezing a vegetable. Fruit, as a raw material for fruit juice, may be those usually used in the art and is not particularly limited. Specific examples include citrus fruits (e.g., orange, mandarin orange, *Citrus unshiu*, Navel, ponkan orange, *Citrus natsudaidai*, lemon, grapefruit, lime, *Citrus hassaku*, iyokan, *Citrus junos*, Camucamu, *Citrus depressa*, *Citrus sphaerocarpa*, mandarin, tangerine, temple orange, tangelo, calamansi), strawberry, raspberry, blueberry, blackberry, blackcurrant, cherry, apple, grape, pomegranate, kiwi fruit, muscat, peach, pineapple, guava, banana, passion fruit, mango, acerola, prune, papaya, passion fruit, Japanese apricot, *Pyrus pyrifolia*, apricot, lichee, melon, water melon, pear, persimmon, loquat, fig, and plums.

Fruit as a raw material for fruit juice is preferably a citrus fruit. Regarding the fruit juice, one of the above fruits may be used singly, or two or more may be used in combination. In the case of using two or more fruits, the percentage of each fruit (fruit juice) may be adjusted depending on the need, and is not particularly limited.

Vegetable, as a raw material for fruit juice, may be those usually used in the art and is not particularly limited. Specific examples include carrot, onion, broccoli, turnip/radish, cabbage, brussels sprout, leaves of brussels sprout, celery, spinach, bell pepper, asparagus, green barley, garland chrysanthemum, Chinese cabbage, mustard greens, salad vegetable, Japanese mustard spinach, qing-geng-cai, *Angelica keiskei*, sweet potato, potato, tomato, mulukhiya, paprika, watercress, parsley, celery, *Cryptotaenia japonica*, lettuce, radish, kale, brussels sprout leaves, perilla, eggplant, Japanese radish, green bean, pumpkin, burdock, green onion, ginger, garlic, leek, leaf mustard, cauliflower, cone, snap peas, gumbo, turnip, cucumber, kohlrabi, gourd, zucchini, sponge gourd, soybean sprouts, and various kinds of sprouts. As the vegetable, one of the above vegetables may be used singly, or two or more vegetables may be used in combination. In the case of using two or more vegetables, the percentage of each vegetable (vegetable juice) may be adjusted depending on the need, and is not particularly limited.

The fruit juice may be obtained by squeezing a raw material fruit or vegetable by a technique known in the art. Examples of the known technique include: a procedure for compressing and squeezing a raw material fruit or vegetable having undergone pretreatment such as washing, sterilization, peeling, removal of the skin and seeds, blanching, crushing, and/or straining depending on the need, by using a hydraulic press machine, a roller compressing/squeezing machine, or an in-line squeezing machine; a procedure for crushing and squeezing the raw material fruit or vegetable by using a pulper/finisher, etc.; or a procedure for crushing the raw material fruit or vegetable by using a crusher, etc. and then squeezing it by using an extractor, etc. Further, those compressed (squeezed) in accordance with each procedure may be, as desired, treated with pectinase and/or cellulase, processed with a juicer, and/or sterilized. Furthermore, the fruit juice is optionally concentrated. In this case, examples of the concentration process include regular concentration by heating, concentration under reduced pressure, low-temperature concentration, vacuum concentration, cryoconcentration, or reverse osmosis concentration. The type of fruit juice may be a straight fruit juice obtained by squeezing a fruit or vegetable, or may be a concentrated fruit juice obtained by concentrating a squeezed juice. In addition, the amount of fruit juice blended is not particularly limited, and is preferably from 0.01 to 50%, more preferably from 0.1 to 40%, and still more preferably from 0.5 to 30% in terms of straight fruit juice. Meanwhile, the amount may be 1% or more or 3% or more.

The state of fruit juice is not particularly limited, and may be, for instance, any of a liquid, gel, paste (quasi-solid), semi-solid, or solid state. Additional components (e.g., a small amount of, for instance, salt, seasoning, and/or food additive) may be further optionally included. Further, in the invention, an opaque fruit juice or a transparent fruit juice may be used.

The straight juice refers to those specified in accordance with Japanese Agricultural Standards (JAS), that is, those obtained by squeezing a fruit or those in which only JAS-approved components are added. In addition, the straight fruit juice and from-concentrate fruit juice refers to those in which JAS-approved components are optionally added to a fruit juice obtained by squeezing a fruit, and those obtained by concentrating the former at a prescribed percentage. Examples of JAS-approved components include an antioxidant such as vitamin C (L-ascorbic acid, L-sodium ascorbate), sugar, honey, or a natural flavoring agent. Other fruit juice using an acidulant such as citric acid or Na citrate, a pH modifier, an enzyme, a stabilizer such as pectin, saccharides other than sugar, and/or a synthetic flavoring agent, which are non-JAS additives, may be used.

### (Others)

The category of the beverage of the invention in various standards is not particularly limited. Examples include, as a food having a function, a specific health food, a functional nutritional food, a food for elderly, a food for special purpose, or a functional food.

The beverage of the invention may be orally ingested using a suitable procedure depending on its form. As used herein, the term "ingestion" is used to encompass all the forms such as ingestion, in-take, or drinking. The amount of beverage ingested in the invention may be adjusted appropriately depending on the form, the ingestion procedure, the purpose of use, and/or the age, body-weight, and symptom of a person who will ingest the beverage.

In addition to linalool and chitosan described above, a sweetener, an acidulant, a fruit juice, and/or various kinds of additives is optionally added to the beverage of the invention as long as the effects of the invention are not prevented. Examples of additives include a flavoring agent, a vitamin compound, a coloring agent, an antioxidant, an emulsifier, a preservative, a flavor enhancer, an extract, a pH modifier, and a quality stabilizer.

The beverage of the invention may be a carbon dioxide-containing carbonated drink, but is preferably a non-carbonated drink. In addition, the beverage of the invention may be an alcoholic beverage, but is preferably a non-alcoholic beverage. The non-alcoholic beverage refers to a beverage having an alcohol level (ethanol level) of less than 1%.

The soluble solid content of the beverage of the invention can be evaluated using a degree Brix obtained with a saccharimeter or a refractometer. The degree Brix is a refractive index measured at 20°C in terms of a sucrose solution in mass/mass percent based on the conversion table of ICUMSA (International Commission for Uniform Methods of Sugar Analysis). This value represents a soluble solid content in the solution. The unit may be represented in "°Bx", "%", or "degrees". In a preferable embodiment, the beverage of the invention has a degree Brix of from 0 to 20%, and the degree Brix is more preferably 10% or less or may be 3% or less or 2% or less.

In a preferable embodiment, the beverage of the invention is a beverage in which precipitation is unlikely to occur even under long-term storage at room temperature. Specifically, in the beverage of the invention, precipitation over time is suppressed. Since the appearance of the beverage can be kept uniform over a long period, the beverage is preferably provided as a bottled beverage. As used herein, the bottled beverage refers to a beverage contained in a resin container such as a polyethylene terephthalate (PET) bottle or a container such as a can, bottle, or paper container. Regarding the beverage of the invention, precipitation in the beverage over time can be decreased. One embodiment is preferably a bottled beverage charged into a transparent container.

The bottled beverage of the invention may be stored at room temperature for a long period. For this purpose, the bottled beverage is produced by charging into a container a liquid formulation that has been obtained at a formulation step, after heating sterilization. The heating sterilization may be treatment defined by the Food Sanitation Act in Japan. For instance, a resin container such as a PET bottle may be subjected to UHT sterilization (e.g., a liquid formulation may be retained at 100 to 150°C for 1 to several dozen seconds.

It may be construed that an embodiment of the invention is a method for producing a beverage. As described above, the beverage of the invention comprises linalool and chitosan, wherein each content is adjusted within a specific range. For instance, the method for producing a beverage according to the invention may include: a step of preparing a beverage by blending given components; a step of adjusting the pH of the beverage; a step of charging into a container; and so on. In a preferable embodiment, a solution containing chitosan and linalool is prepared, and the solution is then charged into a bottle to produce a bottled beverage.

The bottled beverage of the invention can be produced using a conventionally known process. Those skilled in the art can design conditions for the blending protocol, optionally a sterilization procedure, and/or a bottle charging process.

In addition, another embodiment of the invention provides a method of suppressing degradation odor (off-flavors) in a beverage. It can be understood that this method is implemented by decreasing and/or suppressing production of a substance causing degradation odor or by masking degradation odor. As described above, the beverage of the invention comprises linalool and chitosan, wherein the content of chitosan is adjusted within a specific range. Specifically, the method is to suppress a degradation odor (off-flavors) in a beverage, including blending specific amounts of chitosan and linalool in the beverage.

### EXAMPLES

Hereinbelow, the invention will be described in more detail with reference to specific Experimental Examples. However, the invention is not limited to the specific Examples below. In addition, unless otherwise indicated herein, the concentration is based on weight, and end points of the numerical range are inclusive in the description.

### Experiment 1: To Produce and Evaluate Beverage (Orange Flavoring Agent, Heat Acceleration Test)

A bottled beverage having citrus fruit flavor was produced. Specifically, high-fructose corn syrup, an orange flavoring agent, and chitosan were mixed in pure water. Next, each beverage containing linalool and chitosan in the concentrations shown in the tables below was prepared. Then, citric acid and trisodium citrate were added to adjust the pH of the beverage to about 3.2 (the degree Brix of the beverage: about 5.0). The content of linalool in the orange flavoring agent was 1200 ppm. The chitosan used had an average molecular weight of 24 kDa (the average polymerization degree: 150).

180 ml of the beverage prepared was charged into a glass container. Next, sterilization was conducted at 85°C for 10 min. The bottled beverage was then allowed to stand at 45°C for 14 days (heat acceleration test). After that, the flavor of the beverage was sensed and evaluated by three trained panelists. The sensory evaluation was conducted in 5 grades based on the following criteria. The scores of the respective panelists were averaged. A refrigerated storage product used as a control was stored at 5°C.

### (Criteria)

- •5 points:: Best (equivalent to the refrigerated storage product)
- •4 points:: Good (no off-flavors are felt)
- •3 points:: No problem (almost no off-flavors are felt)
- •2 points:: Poor (off-flavors are felt)
- •1 point:: Bad (markedly more deteriorated than a control, and very strong unpleasant odors are felt)

### (To Quantify Linalool)

In this experiment, linalool in the beverage was measured using a GC/MS measuring instrument by the protocol below.

First, 2.5 to 5 g of sample was placed in a vial. Next, the vial was filled at 20 ml with water. Then, 5 ml of heptane and 8 g of sodium chloride were added and stirred. After that, the resulting heptane layer was measured by GC/MS. The resulting values were used to calculate the mass of each component per sample volume as the concentration of each component. The GC/MS measurement conditions are as follows.

### <GC/MS Measurement Conditions>

- Instrument: 7890B/5977B [manufactured by Agilent Technologies Inc.]
- Column: DB-WAX [manufactured by Agilent Technologies Inc.] 30m × 0.25 mm, i.d. df = 0.25 µm
- Injection system: splitless
- Temperature: a sample inlet at 220°C the column at 60°C (kept for 1 min), then, the temperature increased at 10°C/min, then 220°C (kept for 5 min)
   - Gas flow rate: helium (carrier gas) at 1 ml/min
   - Ion source temperature: 230°C
   - Ionization method: EI
   - Preset mass number: m/z = 93, 71

[Table 1]

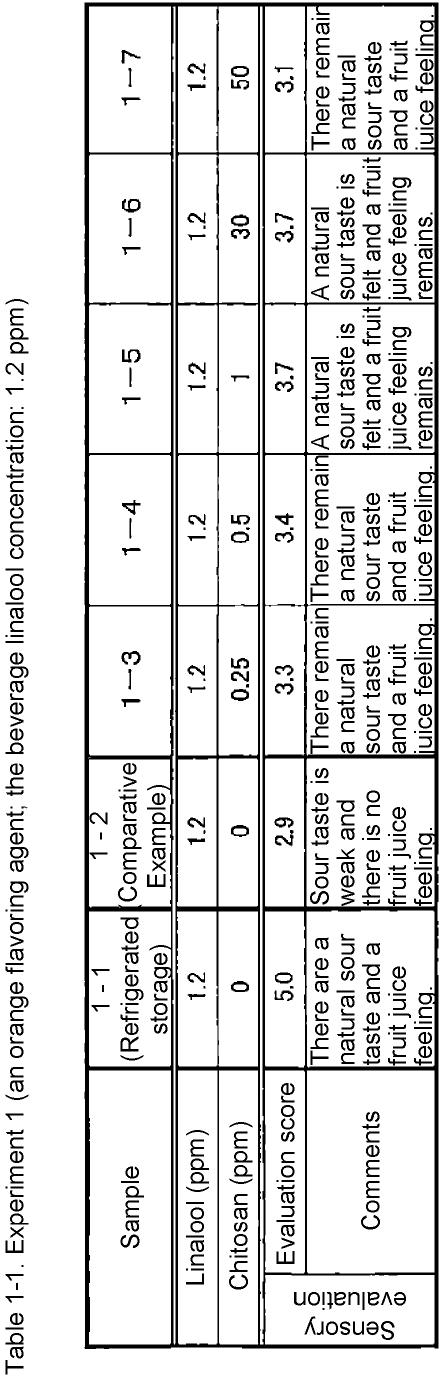

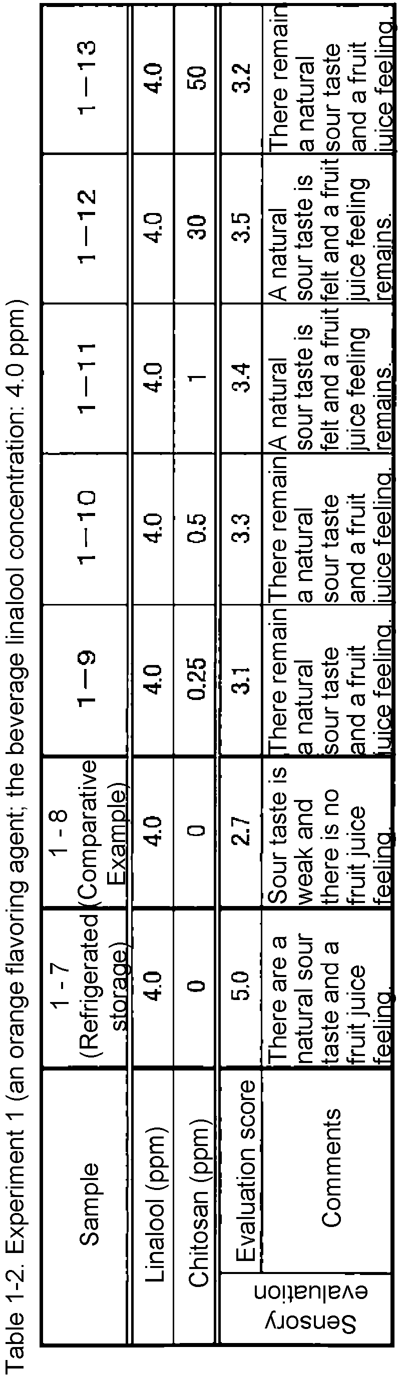

### Experiment 2: To Produce and Evaluate Beverage (Orange Fruit Juice, Heat Acceleration Test)

Substantially the same procedure as in Experiment 1 was repeated, except that an orange juice in addition to the orange flavoring agent was blended, to produce a bottled beverage containing linalool and chitosan in the concentrations shown in the table below. The orange juice used was a 6 times-concentrated, transparent orange juice (linalool content: 1.0 ppm), and the amount of juice blended was about 5% (in terms of straight fruit juice).

The table below shows the evaluation results obtained in substantially the same manner as in Experiment 1.

[Table 2]

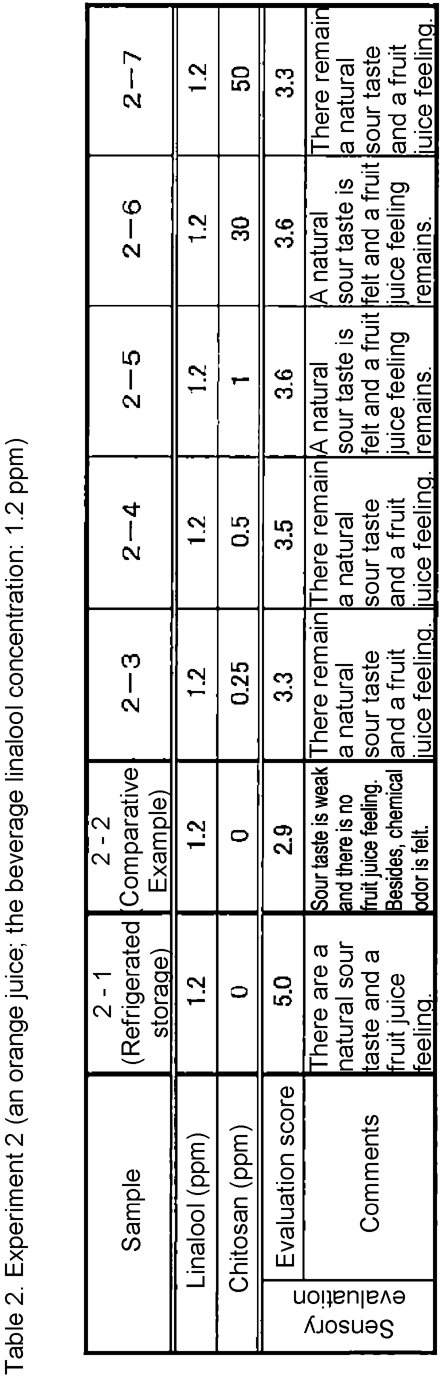

### Experiment 3: To Produce and Evaluate Beverage (Grapefruit Flavoring Agent, Heat Acceleration Test)

Substantially the same procedure as in Experiment 1 was repeated, except that a grapefruit flavoring agent (linalool content: 200 ppm) instead of the orange flavoring agent was blended, to produce a bottled beverage containing linalool and chitosan in the concentrations shown in the table below.

The table below shows the evaluation results obtained in substantially the same manner as in Experiment 1.

[Table 3]

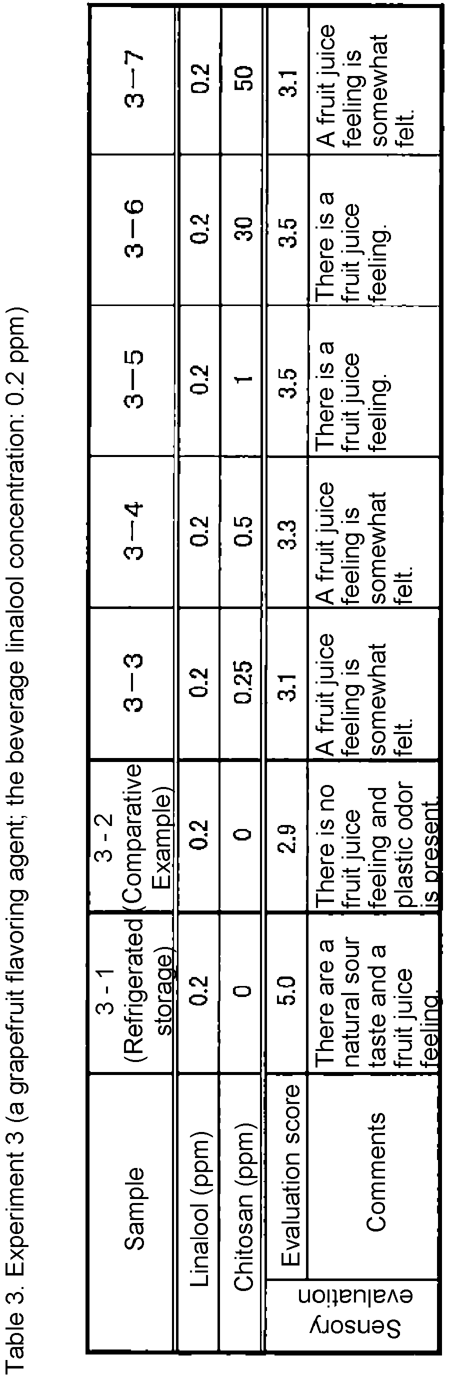

### Experiment 4: To Produce and Evaluate Beverage (Lemon Flavoring Agent, Light Acceleration Test)

Substantially the same procedure as in Experiment 1 was repeated, except that a lemon flavoring agent (linalool content: 300 ppm) instead of the orange flavoring agent was blended, to produce a bottled beverage containing linalool and chitosan in the concentrations shown in the table below.

Next, how light affected the bottled beverage produced was evaluated. The bottled beverage was irradiated at room temperature for 2 days with light at 20000 lux. Then, the flavor of the beverage was sensed and evaluated by three panelists. The sensory evaluation was conducted in substantially the same manner as in Experiment 1.

[Table 4]

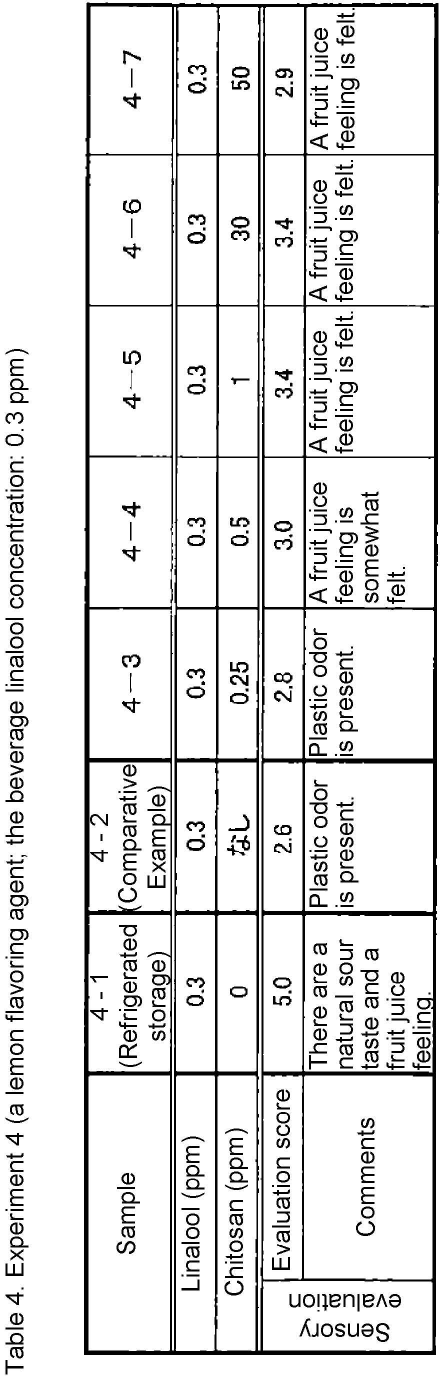

## Claims

1. A beverage comprising 5 ppm or less of linalool and 0.25 to 30 ppm of chitosan.

2. The beverage according to claim 1, which is a fruit juice-containing beverage.

3. The beverage according to claim 1 or 2, wherein the beverage has a pH of from 2.0 to 5.0.

4. The beverage according to any one of claims 1 to 3, wherein the chitosan has a molecular weight of from 100 to 1000 kDa.

5. The beverage according to any one of claims 1 to 4, which is a bottled and sterilized beverage.

6. A method for producing a beverage, comprising adding 5 ppm or less of linalool and 0.25 to 30 ppm of chitosan.

7. A method of suppressing a degradation odor in a beverage, comprising adding 5 ppm or less of linalool and 0.25 to 30 ppm of chitosan.
